# EUROPÄISCHE PATENTSCHRIFT

(11) **EP 1 305 532 B1**
(45) Veröffentlichungstag und Bekanntmachung des Hinweises auf die Patenterteilung: **22.09.2004**
(21) Anmeldenummer: 01957718.8
(22) Anmeldetag: 23.07.2001
(51) Int. Cl.: F16C 17/26, F16C 33/10

(54) **DYNAMISCHE GASLAGERUNG EINER MOTORSPINDEL MIT ENTLÜFTUNG**
DYNAMIC GAS BEARING OF A MOTOR SPINDLE COMPRISING AERATION
PALIER A GAZ DYNAMIQUE POUR BROCHE A MOTEUR COMPRENANT UN SYSTEME D'AERATION

(30) Priorität: 27.07.2000 DE 10037077
(43) Veröffentlichungstag der Anmeldung: 02.05.2003
(73) Patentinhaber: Paul Müller GmbH & Co. KG Unternehmensbeteiligungen, 90411 Nürnberg (DE)
(72) Erfinder: SCHUSTER, Johann, 90429 Nürnberg (DE)
(74) Vertreter: Lösch, Christoph
(86) Internationale Anmeldenummer: PCT/DE2001/002677
(87) Internationale Veröffentlichungsnummer: WO 2002/010598

(56) Entgegenhaltungen:
- EP-A- 0 819 859
- US-A- 5 516 212
- US-A- 5 795 074
- US-A- 5 847 479

## Beschreibung

Die Erfindung betrifft eine dynamische Gaslagerung einer Motorspindel mit den Merkmalen des Oberbegriffs des Patentanspruchs 1.

Als Stand der Technik sind dynamische Gaslagerungen von Motorspindeln bekannt, bei denen sich die Luftspalte der radialen und axialen Gaslager bei zunehmender Betriebsdauer insbesondere aufgrund von Abrieb und Verunreinigung zumindest bereichsweise vermindern. Hierdurch wird der Anlaufwiderstand der dynamischen Gaslagerung erhöht und die Gleichlaufstabilität vermindert.

Der Erfindung liegt die Aufgabe zugrunde, eine dynamische Gaslagerung einer Motorspindel anzubieten, bei welcher keine unerwünschte Veränderung der Laufeigenschaften der Gaslagerung auftritt.

Diese Aufgabe wird durch die Merkmale des kennzeichnenden Teils des Patentanspruchs 1 in Verbindung mit den Merkmalen des Oberbegriffs gelöst. Vorteilhafte Ausführungsformen der Erfindung werden in den Unteransprüchen 2 - 15 beschrieben.

Bei der erfindungsgemäßen Gaslagerung besitzen die mindestens zwei axialen Gaslager unterschiedliche Oberflächenprofile zur Erzeugung einer Strömung des Lagergases in axialer Richtung der Welle zur Entlüftung der Lagerung. Damit wird innerhalb des Gehäuses der Gaslagerung und im Luftspalt der radialen und axialen Lager eine Lagergasströmung erzeugt, wodurch unerwünschte Fremdpartikel (z.B. Verschmutzungspartikel oder Abrieb) entfernt werden und die Lagerung entlüftet sowie gereinigt wird. Somit wird eine unerwünschte Veränderung des Luftspalts der Gaslagerung vermieden und die Gaslagerung kann weitgehend wartungsfrei aufgrund fortlaufender Gasspülung durch die auftretende Dauerreinigung mit hoher Lebensdauer und Laufgenauigkeit betrieben werden. Unter Oberflächenprofil ist eine Oberflächengestaltung mit bereichsweise angebrachten Erhöhungen/-Vertiefungen zu verstehen, wobei letztere auch durch entsprechende Beschichtungen erzeugt werden können. Um das Lagergas, insbesondere die Lagerluft, ansaugen und ausstoßen zu können, besitzt das Gehäuse der Gaslagerung mindestens zwei Öffnungen zur Ein- bzw. Ausleitung der Strömung des Lagergases. Vorteilhafterweise ist mindestens eine Öffnung mit einem Filterelement versehen, um das Ansaugen verschmutzter Umgebungsluft zu vermeiden.

Die erfindungsgemäße dynamische Gaslagerung bezieht sich insbesondere auf eine schnelldrehende Motorspindel, d.h. eine Motorspindel im Drehzahlbereich ab etwa 10.000 Umdrehungen/min bis zu etwa 200.000 Umdrehungen/min. Unter dynamischer Gaslagerung ist im Gegensatz zur statischen Gaslagerung eine selbstragende Gaslagerung ohne externe Zuführung von Lagergas, insbesondere von Druckluft, zu verstehen.

In einer vorteilhaften Ausführungsform sind die axialen Gaslager als Spiralrillen-Axiallager ausgebildet, welche unterschiedliche Spiralrillenprofile als Oberflächenprofile tragen. Durch die unterschiedliche Spiralrillenprofile entsteht bei anlaufender und rotierender Motorspindel zwischen den beiden axialen Gaslagern ein Druckunterschied, so daß die erwünschte Strömung des Lagergases in axialer Richtung der Welle erzeugt wird. Hierzu wird Lagerluft über eine Eintrittsöffnung des Gehäuses angesaugt und durchströmt das Gehäuse und insbesondere den Luftspalt der radialen und axialen Gaslager, um daraufhin das Gehäuse wieder mit den aufgenommenen Fremdpartikeln zu verlassen. Damit wird der Innenraum des Gehäuses und insbesondere der Luftspalt der Gaslager durch die Reinigung und der Lagergasströmung verschmutzungsfrei gehalten.

In einer besonders vorteilhaften Ausführungsform können die beiden axialen Gaslager durch einen Wellenabsatz der Welle gebildet werden, wobei die eine Seite des Wellenabsatzes das erste und die andere Seite des Wellenabsatzes das zweite Gaslager bildet. Dabei ist ein derartiger Wellenabsatz auf der einen Seite mit einer ersten Oberfläche mit einem ersten Oberflächenprofil und auf der anderen Seite (Rückseite) mit einer zweiten Oberfläche mit einem zweiten Oberflächenprofil versehen. Erfindungsgemäß sind dabei unterschiedliche, d.h. hinsichtlich ihrer Lage und/oder Ausbildung verschiedene Oberflächenprofile vorgesehen, wodurch bei Betrieb der Motorspindel ein Druckunterschied zwischen den beiden Oberflächen und damit zwischen den axialen Gaslagern entsteht und die erwünschte Lagergasströmung erzeugt wird.

Gemäß einer weiteren vorteilhaften Ausführungsform sind auf der ersten bzw. zweiten Oberfläche des mindestens einen Wellenabsatzes jeweils in Kreisringbereichen angebrachte erste bzw. zweite Oberflächenprofile vorgesehen. Die Kreisringbereiche können dabei unterbrochen oder umlaufend sowie auf den verschiedenen Oberflächen in unterschiedlichem Abstand zum Mittelpunkt der Welle angeordnet sein. Bei zwischen einem Innenradius rᵢ und einem Außenradius rₐ des Wellenabsatzes angeordneten Kreisringbereichen können die Kreisringbereiche unterschiedliche Außenradien rₐ und/oder unterschiedliche Innenradien rᵢ aufweisen. Hierdurch erhalten die in den Kreisringbereichen angeordneten Oberflächenprofile eine unterschiedliche Anordnung, wodurch beim Zusammenwirken unterschiedlicher Oberflächenprofile die gewünschte Druckdifferenz zur Erzeugung einer Strömung des Lagergases hervorgerufen wird.

Die Oberflächenprofile können z.B. als Stufenprofil, partiell einwärts geformtes Profil, partiell auswärts geformtes Profil oder Fischgrätenprofil ausgebildet sein. Näheres hierzu wird in Zusammenhang mit den Zeichnungsfiguren erläutert.

Die Erfindung ist anhand von Ausführungsbeispielen in den Zeichnungsfiguren näher erläutert. Es zeigen:
- Fig. 1: eine Schnittansicht einer Motorspindel mit der erfindungsgemäßen Gaslagerung,
- Fig.2: eine Darstellung eines Oberflächenprofils eines axialen Gaslagers als Stufenprofil,
- Fig. 3: eine Prinzipdarstellung eines Wellenabsatzes der Welle mit einem Kreisringbereich zur Anbringung eines Oberflächenprofils,
- Fig.4: eine Darstellung eines Oberflächenprofils eines axialen Gaslagers als Spiralrillenprofil,
- Fig. 5: eine Darstellung eines Oberflächenprofils eines axialen Gaslagers als partiell einwärts geformtes Profil,
- Fig. 6: eine Darstellung eines Oberflächenprofils eines axialen Gaslagers als partiell auswärts geformtes Profil sowie
- Fig. 7: als Fischgrätenprofil.

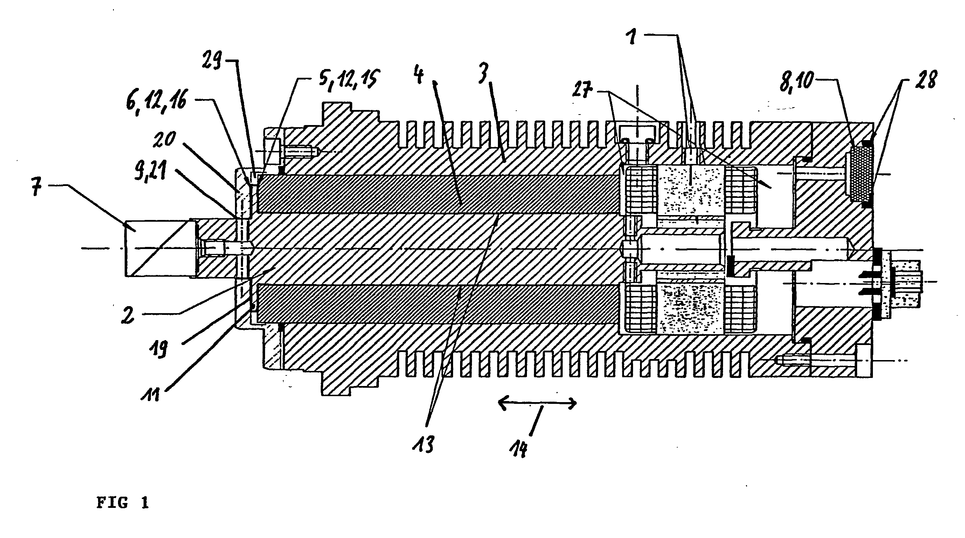

Fig. 1 zeigt einen Längsschnitt durch das Gehäuse 3 einer Motorspindel mit einem Motorraum 27 mit Motor 1, z.B. einem elektronisch kommutierten DC-Motor, zum Antrieb der Welle 2, an deren dem Motor 1 abgewandten Ende ein optisches Element, z.B. ein Spiegelelement 7 oder ein Polygonspiegel, angebracht ist. Die Erfindung betrifft insbesondere die dynamische Gaslagerung einer schnelldrehenden Scanner-Motorspindel (Scannermotor) zur digitalen Bildprojektion, z.B. zur Belichtung von filmempfindlichen Materialien oder zur Bildprojektion auf eine Betrachterleinwand.

Die Welle 2 ist in einem radialen Gaslager 4 und einem ersten axialen Gaslager 5 sowie einem zweiten axialen Gaslager 6 im Gehäuse 3 gelagert. Die axiale Lagerung wird durch den Wellenabsatz 11 der Welle 2 gebildet, wobei sich auf der einen Seite des Wellenabsatzes 11 eine erste Oberfläche 15 mit einem ersten Oberflächenprofil 12 und auf der anderen Seite (Rückseite) des Wellenabsatzes 11 eine zweite Oberfläche 16 mit einem weiteren Oberflächenprofil 12 befindet. Durch unterschiedliche Auswahl und/oder Anordnung der Oberflächenprofile 12 auf der ersten und zweiten Oberfläche 15, 16 des Wellenabsatzes 11 entsteht beim Betrieb der Welle 2 ein Druckunterschied zwischen der vorderen und hinteren Seite des Wellenabsatzes 11, also dem ersten axialen Gaslager 5 und dem zweiten axialen Gaslager 6, wodurch die gewünschte Strömung des Lagergases in axialer Richtung 14 der Welle 2 erzeugt wird.

Diese Strömung des Lagergases, insbesondere der Lagerluft, durchspült den Luftspalt 13 zwischen Welle 2 und radialem Gaslager 4 sowie den Luftspalt 19 auf der vorderen und hinteren Seite des Wellenabsatzes 11. Hierdurch wird die Lagerluft durch die Öffnung 8 mit Filterelement 10 und Dichtung 28 angesaugt und durch die Öffnung 9, welche als Spalt 21 zwischen der vorderen Abdeckung 20 des Gehäuses 3 und der Welle 2 ausgebildet ist, ausgeleitet. Dabei werden z.B. zwischen dem radialen Gaslager 4 und der Welle 2 vorhandene Stör- und/oder Fremdpartikel erfaßt und verlassen nach Umspülung des Wellenabsatzes 11 das Gehäuse 3 der Lagerung durch den Spalt 21, wobei sich insbesondere schwerere Stör- und/oder Fremdpartikel auch im Hohlraum 29 ablagern können.

Im vorliegenden Fall dient die Öffnung 8 als Eintrittsöffnung für die Umgebungsluft und der Spalt 21 als Austrittsöffnung für die erzeugte Luftströmung. Abhängig vom Betriebszustand der Motorspindel kann z.B. beim Hochlaufen oder Abbremsen auch eine umgekehrte Strömungsrichtung auftreten. Hierzu kann auch eine Luftströmung vom Spalt 21 zur Öffnung 8 auftreten. Der Spalt 21 kann dabei auch mit einem Filterelement versehen sein (nicht abgebildet).

Ferner kann insbesondere bei einer Anbringung eines Spiegelelements 7 am Ende der Welle 2 auch eine endseitige Gehäuseabdeckung des Gehäuses 3 zur Abkapselung des Spiegelelements 7 vorgesehen sein. In einer derartigen Abkapselung kann auch eine Öffnung (mit Filterelement) zur Ein-/Ausleitung der Lagergasströmung angebracht sein (nicht abgebildet). Alternativ kann eine definierte Öffnung in der Abdeckung 20 des Gehäuses 3 vorgesehen sein (ebenfalls nicht abgebildet).

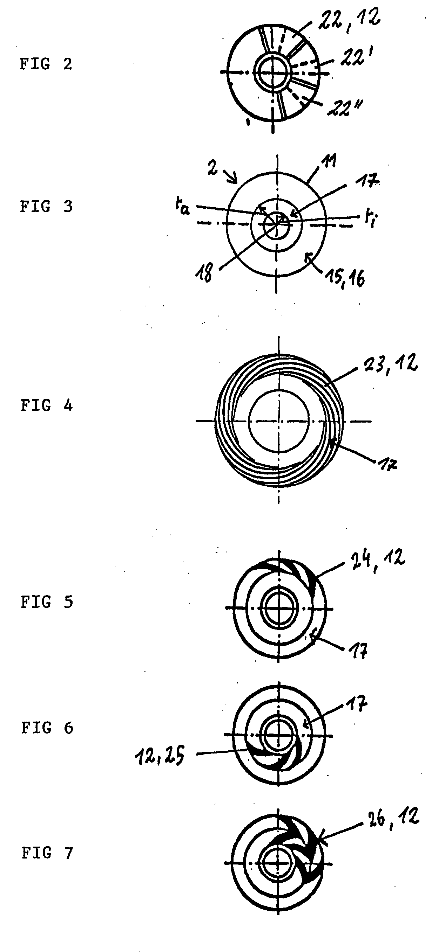

In den folgenden Fig. 2 - 7 werden verschiedene mögliche Anordnungen der Oberflächenprofile 12 z.B. auf dem Wellenabsatz 11 der Welle 2 erläutert.

Fig. 2 zeigt ein axiales Gaslager, welches ein Stufenprofil als Oberflächenprofil 12 aufweist, wobei die einzelnen Stufen 22, 22', 22" beispielhaft für umlaufend dargestellte Stufen 22 abgebildet und in unterschiedlichen Ebenen zueinander (z.B. auf-/absteigend oder wellenförmig) angeordnet sind.

Fig. 3 zeigt eine Prinzipdarstellung eines Kreisringbereiches 17 mit einem Innenradius rᵢ und einem Außenradius rₐ auf einer Oberfläche 15, 16 eines Wellenabsatzes 11 einer Welle 2 mit einem Mittelpunkt 18.

Beispielhaft ist in Fig. 4 zwischen dem Innenradius rᵢ und dem Außenradius rₐ in dem sich ergebenden Kreisringbereich 17 ein Spiralrillenprofil 23 als Oberflächenprofil 12 abgebildet.

Fig. 5 zeigt als Oberflächenprofil 12 ein partiell einwärts geformtes Profil 24, welches im Kreisringbereich 17 umlaufend oder unterbrochen angeordnet sein kann.

Fig. 6 zeigt ein partiell auswärts geformtes Profil 25 als Oberflächenprofil 12 in einem gegenüber Fig. 5 nach innen gerückten Kreisringbereich 17.

In einer besonders vorteilhaften Ausführungsform der erfindungsgemäßen Gaslagerung besitzt eine Oberfläche 15 ein Oberflächenprofil 12 in einem äußeren Kreisringbereich 17 ( z.B. ein Profil nach Fig. 5) und die zweite Oberfläche 16 ein Oberflächenprofil 12 in einem inneren Kreisringbereich 17 (z.B. ein Profil nach Fig. 6). Dabei kann der Innenradius rᵢ des äußeren Kreisringbereichs 17 den Außenradius rₐ des inneren Kreisringbereichs 17 erreichen oder übersteigen.

Fig. 7 zeigt ein Fischgrätenprofil 26 als Oberflächenprofil 12, welches in einem Sektorbereich oder umlaufend angeordnet ist.

Durch Kombination der abgebildeten oder weiterer Oberflächenprofile 12 auf den Oberflächen 15, 16 des Wellenabsatzes 11 der Welle 2 der Motorspindel können die angestrebten Druckdifferenzen zwischen den Oberflächen 15, 16 erzeugt und damit die gewünschte Lagergasströmung in axialer Richtung 14 der Welle 2 bewirkt werden.

## Patentansprüche

1. Dynamische Gaslagerung einer Motorspindel, mit einer rotierenden Welle (2), die in einem Gehäuse (3) in radialer und axialer Richtung gasgelagert ist, wobei zur radialen Lagerung entlang der Welle mindestens ein radiales Gaslager (4) und zur axialen Lagerung mindestens zwei axiale Gaslager (5,6) vorhanden sind,
**dadurch gekennzeichnet, daß** die zwei axialen Gaslager (5, 6) unterschiedliche Oberflächenprofile (12) zur Erzeugung einer Strömung des Lagergases in axialer Richtung (14) der Welle (2) zur Entlüftung der Lagerung aufweisen.

2. Dynamische Gaslagerung nach Anspruch 1,
**dadurch gekennzeichnet, daß** das Gehäuse (3) mindestens zwei Öffnungen (8, 9) zur Ein- bzw. Ausleitung der Strömung des Lagergases aufweist.

3. Dynamische Gaslagerung nach Anspruch 2,
**dadurch gekennzeichnet, daß** mindestens eine Öffnung (8, 9) ein Filterelement (10) zur Reinigung von ein- bzw. ausgeleiteter Strömung des Lagergases aufweist.

4. Dynamische Gaslagerung nach einem der vorhergehenden Ansprüche,
**dadurch gekennzeichnet, daß** die zwei axialen Gaslager (5, 6) als Spiralrillen-Axiallager ausgebildet sind.

5. Dynamische Gaslagerung nach einem der vorhergehenden Ansprüche,
**dadurch gekennzeichnet, daß** die Welle (2) mindestens einen Wellenabsatz (11) zur Ausbildung der beiden axialen Gaslager (5, 6) aufweist.

6. Dynamische Gaslagerung nach Anspruch 5,
**dadurch gekennzeichnet, daß** der Wellenabsatz (11) eine erste Oberfläche (15) mit einem ersten Oberflächenprofil (12) und eine zweite Oberfläche (16) mit einem zweiten Oberflächenprofil (12) aufweist.

7. Dynamische Gaslagerung nach Anspruch 6,
**dadurch gekennzeichnet, daß** das erste bzw. zweite Oberflächenprofil (12) in Kreisringbereichen (17) der ersten bzw. zweiten Oberfläche (15, 16) angebracht sind.

8. Dynamische Gaslagerung nach Anspruch 7,
**dadurch gekennzeichnet, daß** die Kreisringbereiche (17) in unterschiedlichem Abstand zum Mittelpunkt (18) der Welle (2) angeordnet sind.

9. Dynamische Gaslagerung nach Anspruch 7 oder 8,
**dadurch gekennzeichnet, daß** die Kreisringbereiche (17) zwischen einem Innenradius rᵢ und einem Außenradius rₐ des Wellenabsatzes (11) angeordnet sind.

10. Dynamische Gaslagerung nach Anspruch 9,
**dadurch gekennzeichnet, daß** die Kreisringbereiche (17) unterschiedliche Außenradien rₐ aufweisen.

11. Dynamische Gaslagerung nach Anspruch 9 oder 10,
**dadurch gekennzeichnet, daß** die Kreisringbereiche (17) unterschiedliche Innenradien rᵢ aufweisen.

12. Dynamische Gaslagerung nach einem der vorhergehenden Ansprüche,
**dadurch gekennzeichnet, daß** mindestens ein Oberflächenprofil (12) als Stufenprofil ausgebildet ist.

13. Dynamische Gaslagerung nach einem der vorhergehenden Ansprüche,
**dadurch gekennzeichnet, daß** mindestens ein Oberflächenprofil (12) als partiell einwärts geformtes Profil (24) ausgebildet ist.

14. Dynamische Gaslagerung nach einem der vorhergehenden Ansprüche,
**dadurch gekennzeichnet, daß** mindestens ein Oberflächenprofil (12) als partiell auswärts geformtes Profil (25) ausgebildet ist.

15. Dynamische Gaslagerung nach einem der vorhergehenden Ansprüche,
**dadurch gekennzeichnet, daß** mindestens ein Oberflächenprofil (12) als Fischgrätenprofil (26) ausgebildet ist.

## Claims

1. A dynamic gas mounting of a motor spindle, with a rotating shaft (2) which is gas-mounted in a housing (3) in the radial and the axial direction, at least one radial gas bearing (4) being present for radial mounting along the shaft and at least two axial gas bearings (5,6) being present for axial mounting, **characterized in that** the two axial gas bearings (5, 6) have different surface profiles (12) for generating a flow of the bearing gas in the axial direction (14) of the shaft (2) in order to vent the mounting.

2. The dynamic gas mounting as claimed in claim 1, **characterized in that** the housing (3) has at least two orifices (8, 9) for the introduction and discharge of the flow of bearing gas.

3. The dynamic gas mounting as claimed in claim 2, **characterized in that** at least one orifice (8, 9) has a filter element (10) for cleaning the introduced or discharged flow of bearing gas.

4. The dynamic gas mounting as claimed in one of the preceding claims, **characterized in that** the two axial gas bearings (5, 6) are designed as spiral-flute axial bearings.

5. The dynamic gas mounting as claimed in one of the preceding claims, **characterized in that** the shaft (2) has at least one shaft shoulder (11) for forming the two axial gas bearings (5, 6).

6. The dynamic gas mounting as claimed in claim 5, **characterized in that** the shaft shoulder (11) has a first surface (15) with a first surface profile (12) and a second surface (16) with a second surface profile (12).

7. The dynamic gas mounting as claimed in claim 6, **characterized in that** the first and the second surface profile (12) are formed in annular regions (17) of the first and the second surface (15, 16) respectively.

8. The dynamic gas mounting as claimed in claim 7, **characterized in that** the annular regions (17) are arranged at a different distance from the center point (18) of the shaft (2).

9. The dynamic gas mounting as claimed in claim 7 or 8, **characterized in that** the annular regions (17) are arranged between an inner radius rᵢ and an outer radius rₐ of the shaft shoulder (11).

10. The dynamic gas mounting as claimed in claim 9, **characterized in that** the annular regions (17) have different outer radii rₐ.

11. The dynamic gas mounting as claimed in claim 9 or 10, **characterized in that** the annular regions (17) have different inner radii rᵢ.

12. The dynamic gas mounting as claimed in one of the preceding claims, **characterized in that** at least one surface profile (12) is designed as a stepped profile.

13. The dynamic gas mounting as claimed in one of the preceding claims, **characterized in that** at least one surface profile (12) is designed as a partially inward-shaped profile (24).

14. The dynamic gas mounting as claimed in one of the preceding claims, **characterized in that** at least one surface profile (12) is designed as a partially outward-shaped profile (25).

15. The dynamic gas mounting as claimed in one of the preceding claims, **characterized in that** at least one surface profile (12) is designed as a herringbone profile (26).

## Revendications

1. Palier à gaz dynamique d'une broche à moteur, comprenant un arbre rotatif (2) qui est monté sur palier à gaz dans la direction radiale et axiale dans un carter (3), au moins un palier à gaz radial (4) pour le support radial le long de l'arbre et au moins deux paliers à gaz axiaux (5, 6) pour le support axial étant prévus,
**caractérisé en ce que**
les deux paliers à gaz axiaux (5, 6) présentent des profils de surface différents (12) pour produire un écoulement du gaz du palier dans la direction axiale (14) de l'arbre (2) pour la purge du palier.

2. Palier à gaz dynamique selon la revendication 1,
**caractérisé en ce que** le carter (3) présente au moins deux ouvertures (8, 9) pour l'introduction et l'évacuation de l'écoulement du gaz du palier.

3. Palier à gaz dynamique selon la revendication 2,
**caractérisé en ce qu'**au moins une ouverture (8, 9) présente un élément de filtre (10) pour la purification de l'écoulement introduit ou évacué du gaz du palier.

4. Palier à gaz dynamique selon l'une quelconque des revendications précédentes,
**caractérisé en ce que** les deux paliers à gaz axiaux (5, 6) sont réalisés sous forme de paliers axiaux à gorges en spirale.

5. Palier à gaz dynamique selon l'une quelconque des revendications précédentes,
**caractérisé en ce que** l'arbre (2) présente au moins un retrait d'arbre (11) pour la réalisation des deux paliers à gaz axiaux (5, 6).

6. Palier à gaz dynamique selon la revendication 5,
**caractérisé en ce que** le retrait d'arbre (11) présente une première surface (15) avec un premier profil de surface (12) et une deuxième surface (16) avec un deuxième profil de surface (12).

7. Palier à gaz dynamique selon la revendication 6,
**caractérisé en ce que** le premier ou le deuxième profil de surface (12) sont montés dans des régions annulaires circulaires (17) de la première ou de la deuxième surface (15, 16).

8. Palier à gaz dynamique selon la revendication 7,
**caractérisé en ce que** les régions annulaires circulaires (17) sont disposées à différentes distances par rapport au centre (18) de l'arbre (2).

9. Palier à gaz dynamique selon la revendication 7 ou 8,
**caractérisé en ce que** les régions annulaires circulaires (17) sont disposées entre un rayon interne rᵢ et un rayon externe rₐ du retrait d'arbre (11).

10. Palier à gaz dynamique selon la revendication 9,
**caractérisé en ce que** les régions annulaires circulaires (17) présentent différents rayons externes rₐ.

11. Palier à gaz dynamique selon la revendication 9 ou 10,
**caractérisé en ce que** les régions annulaires circulaires (17) présentent différents rayons internes rᵢ.

12. Palier à gaz dynamique selon l'une quelconque des revendications précédentes,
**caractérisé en ce qu'**au moins un profil de surface (12) est réalisé en tant que profil étagé.

13. Palier à gaz dynamique selon l'une quelconque des revendications précédentes, **caractérisé en ce qu'**au moins un profil de surface (12) est réalisé en tant que profil formé partiellement vers l'intérieur (24).

14. Palier à gaz dynamique selon l'une quelconque des revendications précédentes,
**caractérisé en ce qu'**au moins un profil de surface (12) est réalisé en tant que profil formé partiellement vers l'extérieur (25).

15. Palier à gaz dynamique selon l'une quelconque des revendications précédentes,
**caractérisé en ce qu'**au moins un profil de surface (12) est réalisé en tant que profil en arête de poisson (26).
